(19) **Europäisches Patentamt / European Patent Office / Office européen des brevets**

(11) **EP 0 863 599 B1**

(12) **FASCICULE DE BREVET EUROPEEN**

(45) Date de publication et mention
de la délivrance du brevet:
**16.04.2008   Bulletin 2008/16**

(51) Int Cl.:
***H02J 7/10*** (2006.01)

(21) Numéro de dépôt: **98400455.6**

(22) Date de dépôt: **26.02.1998**

(54) **Procédé de charge d'accumulateurs nickel-hydrure métallique sans maintenance**

Ladeverfahren für wartungsfreie Nickelmetallhydridbatterien

Method for charging maintenance-free nickel metal hydride batteries

(84) Etats contractants désignés:
**DE FR GB IT SE**

(30) Priorité: **03.03.1997   FR 9702508**

(43) Date de publication de la demande:
**09.09.1998   Bulletin 1998/37**

(73) Titulaire: **SAFT GROUPE SA**
**93170 Bagnolet (FR)**

(72) Inventeurs:
• **Berlureau, Thierry**
**33300 Bordeaux (FR)**

• **Liska, Jean-Louis**
**33200 Bordeaux (FR)**

(74) Mandataire: **Pochart, François et al**
**Hirsch & Associés**
**58, Avenue Marceau**
**75008 Paris (FR)**

(56) Documents cités:
**EP-A- 0 308 653       EP-A- 0 626 746**
**EP-A- 0 689 275**

**Description**

L'invention concerne un procédé de charge d'accumulateurs nickel-hydrure métallique Ni-MH ne nécessitant pas de maintenance. Ces accumulateurs sont habituellement montés en batteries de forte capacité (10Ah à 200Ah) qui sont notamment destinées à équiper les véhicules dans le domaine terrestre ou aéronautique.

Les accumulateurs à électrolyte alcalin actuellement commercialisés sont soit de type "ouvert" (appelés aussi "industriels") permettant des échanges gazeux avec le milieu ambiant, soit de type "étanche" (appelés aussi "portables") sans échange avec l'extérieur en fonctionnement normal. La plupart des accumulateurs de type "étanche" sont principalement destinés à être incorporés dans des appareils portables; ils sont donc de petite taille et de capacité limitée. Les accumulateurs de type "ouvert" ont habituellement une forme prismatique, une capacité élevée et une faible pression interne. Les accumulateurs de ce type doivent faire l'objet d'un réajustement périodique du niveau de l'électrolyte à cause des pertes par électrolyse et par évaporation due au contact avec le milieu ambiant. Les exigences croissantes des utilisateurs d'accumulateurs de type "ouvert" ont conduit à la mise au point d'accumulateurs industriels ne nécessitant pas de maintenance en réduisant leurs échanges avec l'extérieur.

Le couple Ni-MH en cours de développement présente des performances élevées, mais on a constaté qu'il est nécessaire de limiter strictement les phénomènes de surcharge de ces accumulateurs pour garantir une durée de vie suffisante. Par exemple en vue d'une utilisation pour la traction d'un véhicule électrique, la durée de vie doit être d'au moins 1500 cycles de charge/décharge. Le niveau de performances des batteries Ni-MH dépend du procédé de charge utilisé permettant un état de charge maximum sans intégrer un coefficient de surcharge important.

La charge d'un accumulateur à électrolyte alcalin sans maintenance comprend deux phases. Une première phase, ou charge proprement dite, correspond à l'oxydoréduction des matières actives des électrodes. Pour un accumulateur Ni-MH, cette réaction est légèrement exothermique et se produit sans dégagement gazeux. Lorsque toute la matière active de l'électrode positive a été transformée, l'accumulateur entre dans une deuxième phase, dite de surcharge, durant laquelle il se produit un dégagement d'oxygène sur l'électrode positive. La réduction électrochimique de l'oxygène du côté de l'électrode négative, ou "recombinaison", conduit d'une part à une élévation de la température (réaction exothermique) qui a pour effet secondaire la baisse de la tension de l'accumulateur, et d'autre part à une augmentation de la pression interne de l'accumulateur due principalement à l'oxygène en cours de recombinaison.

Le passage de la phase de charge à la phase de surcharge est d'autant plus progressif que la température de charge de l'accumulateur est élevée, et donc d'autant plus difficile à détecter. Par conséquent un contrôle permanent des paramètres de la batterie en cours de charge s'avère nécessaire.

D'abord le procédé de charge doit permettre d'atteindre la capacité maximale chargeable avec le meilleur rendement. Or la chargeabilité de l'accumulateur Ni-MH décroît lorsque sa température interne augmente. Il est donc nécessaire de définir un procédé permettant d'optimiser la charge quels que soient l'état de charge initial de la batterie et l'évolution de sa température interne pendant la charge. Ce procédé peut être introduit dans le système de gestion de la batterie pour permettre à l'utilisateur de charger sa batterie sans risque pour l'environnement ni pour la batterie. Ensuite le procédé de charge ne doit pas autoriser d'augmentation trop importante de la pression interne de l'accumulateur. En cas de surpression les soupapes de sécurité s'ouvrent et on observe au cours des cycles une détérioration de la capacité par assèchement progressif de l'accumulateur.

Enfin le procédé de charge doit minimiser la durée de la phase de surcharge. La surcharge est nécessaire pour compléter la charge effectuée durant la première phase, d'une part pour maximiser la charge de l'accumulateur et d'autre part dans le cas d'une batterie pour homogénéiser le niveau de charge des différents accumulateurs. Le problème reste dans le choix d'un critère fiable indiquant la fin de la charge quelles que soient les conditions initiales dans lesquelles se trouve la batterie. Ce critère ne peut être basé que sur l'un des paramètres physiques utilisables: la tension, la pression et/ou la température.

On a déjà proposé les critères de fin de charge suivants:

- la diminution de la tension (-$\Delta V$), critère couramment utilisé pour le couple Ni-Cd avec un signal de commutation classiquement de l'ordre de -10mV à -20mV, ne peut être appliqué au couple Ni-MH en raison du faible signal en tension généré par ce couple en fin de charge (0mV à -5mV);
- l'augmentation absolue de la température (+$\Delta\theta$) de l'accumulateur entre le début et la fin de la charge; ce critère s'applique difficilement au couple Ni-MH en raison de l'accroissement de température qui se produit dès le commencement de la charge;
- l'augmentation relative de la température de l'accumulateur par rapport à une loi d'échauffement servant de référence ($\theta - \theta_{\text{réf}}$) ; cette méthode a été adaptée au couple Ni-MH après qu'eût été modélisé mathématiquement le comportement exothermique de la phase de charge de ce couple (FR-2 705 835); le signal de commutation utilisé est habituellement de l'ordre de +10°C à +15°C pour le couple Ni-Cd mais seulement de +5°C à +6°C pour le couple Ni-MH;
- la vitesse de variation de la température de l'accumulateur, c'est à dire la dérivée de la température par rapport au temps (+dθ/dt), utilisée fréquemment pour le couple Ni-MH en raison du faible signal en température absolue généré par ce couple en fin de charge; le signal de commutation utilisé est classiquement de l'ordre de 20°C/heure à 60°C/heure;

Tous ces critères sont relatifs à des procédés de charge adaptés aux accumulateurs de type étanche de petite taille, à conteneur métallique généralement cylindrique, et de faible capacité (approximativement jusqu'à 10Ah). Ces accumulateurs utilisent un procédé de recharge basé sur une séquence à fort régime ($I_c/2$ à $2I_c$, c'est-à-dire un régime permettant de charger 100% de la capacité en 2h à 1/2h). Comme les accumulateurs portables ont une faible inertie thermique, ils sont très sensibles aux variations de la température extérieure. Leur procédé de charge peut être parasité par des variations de la température de l'environnement dans lequel ils sont placés (coupure trop rapide, pas de coupure de la charge, etc...). Les documents DE-4 332 533, WO-92/11680 et WO-89/02182 ont proposé de tenir compte de ces éventuelles fluctuations en affectant les critères basés sur la température de l'accumulateur (+Δθ et +dθ/dt) d'une correction de température ambiante.

Le document EP 0308653 propose un procédé pour charger rapidement des batteries au plomb sans entretien où la charge s'effectue en trois phases successives de façon que dans la première phase on charge avec un courant constant qui correspond au courant de décharge de la batterie pendant 4 à 8 heures, jusqu'à ce qu'on atteigne une tension de charge dépendant de la température. Dans la seconde phase on continue à charger, sous contrôle de tension et avec la tension de charge précédemment atteinte, mais désormais adaptée en continu à la température de la batterie, et ceci pendant un temps prédéfini qui est conjointement avec la première phase de 4 à 10 heures, de préférence de 5 à 8 heures, et en ce que dans la troisième phase, également limitée dans le temps, on charge selon une courbe caractéristique IU, tandis qu'un courant circulant au début est limité à des valeurs comprises entre 0,05 et 0,5 fois le courant de décharge de la batterie en dix heures.

Les accumulateurs industriels Ni-MH sans maintenance ont des capacités nettement plus élevées (10Ah à 200Ah) que les accumulateurs portables. Leur géométrie parallélépipédique et la nature de leur bac (matière plastique) ne leur permettent pas de résister à des surpressions importantes. Par conséquent une charge à fort régime régie par les critères précédemment mentionnés n'est pas autorisée sous peine d'entraîner d'une part l'ouverture des soupapes de sécurité et d'autre part un échauffement important, ce qui est préjudiciable à la durée de vie de l'accumulateur.

L'invention a pour but de proposer un procédé de charge à régime modéré qui soit spécifiquement adapté aux accumulateurs industriels Ni-MH sans maintenance et ne présente pas les inconvénients précités.

L'objet de la présente invention est un procédé de charge d'accumulateur industriel Ni-MH sans maintenance, caractérisé en ce qu'il comprend en combinaison:

- une première phase dite de charge effectuée à un courant constant $I_1$ compris entre $I_c/10$ et $I_c/2$, où $I_c$ est le courant nécessaire à la décharge dudit accumulateur en une heure, phase durant laquelle la température θ dudit accumulateur augmente, et
- une deuxième phase dite de surcharge effectuée à un courant constant $I_2$ compris entre $I_c/50$ et $I_c/10$, le passage de ladite première phase à ladite deuxième phase se produisant lorsque la dérivée de ladite température par rapport au temps dθ/dt atteint une valeur-seuil $(dθ/dt)_s$ qui est variable et dépend de la température θ dudit accumulateur au moment dudit passage: $(dθ/dt)_s = f(θ)$.

Selon une variante de l'invention, ladite valeur-seuil $(dθ/dt)_s$ dépend en outre dudit courant constant $I_1$ de ladite première phase, dans une moindre mesure.

Ce procédé a l'avantage d'être utilisable dans un large domaine de température. Mais il est cependant nécessaire de se limiter à un domaine de température acceptable pour le fonctionnement de l'accumulateur car une charge à trop haute ou trop basse température risquerait de l'endommager irréversiblement. De préférence le domaine choisi est compris entre -20°C et +50°C. Dans ce domaine de température, la valeur-seuil $(dθ/dt)_s$ est généralement comprise entre 4°C/heure et 10°C/heure.

Selon un mode de réalisation, ladite valeur-seuil est comprise entre une limite inférieure, définie par l'impact sur ledit accumulateur des perturbations thermiques qui lui sont extérieures, et une limite supérieure définie par la valeur maximale que peut prendre ladite dérivée de la température par rapport au temps dθ/dt diminuée dudit impact.

Cette limite supérieure tient compte des échanges thermiques existants entre l'accumulateur et son environnement extérieur. Notamment la batterie d'un véhicule électrique peut être soumise à une perturbation thermique due à une variation soudaine de la température de l'environnement, par exemple si l'utilisateur sort sa voiture d'un garage climatisé vers du bitume chaud. Si la charge commence à ce moment là, la température de la batterie va augmenter plus rapidement. On tient compte de cet impact lors du choix du procédé de charge.

Il faut noter que l'effet d'une variation de la température ambiante inférieure à 20°C sur le signal dθ/dt est pratiquement négligeable à cause de l'inertie thermique importante des accumulateurs industriels due à leur conception (bac plastique et électrolyte limité) qui ne favorise pas les échanges thermiques.

Selon un autre mode de réalisation, ladite valeur-seuil comprend au moins un domaine de température où elle reste sensiblement constante suivi d'un domaine où elle décroît lorsque ladite température $\theta$ s'élève. C'est la capacité de l'accumulateur à se charger dans les conditions qui lui sont imposées qui détermine le domaine de température dans lequel la valeur-seuil sera constante.

De préférence, ladite valeur-seuil décroît de façon sensiblement linéaire lorsque la température dudit accumulateur s'élève. On détermine les coefficients de l'équation linéaire soit de manière expérimentale, soit par calcul à partir de la modélisation du comportement thermique de l'accumulateur dans son environnement.

Selon la présente invention, on charge pendant ladite deuxième phase une capacité $C_2$ qui dépend d'une capacité $C_1$ chargée pendant ladite première phase. De manière avantageuse, ladite capacité $C_2$ est une fonction linéaire de ladite capacité $C_1$.

Pour un accumulateur industriel Ni-MH sans maintenance ayant une capacité réelle $C_r$, ladite capacité $C_1$ en Ah et ladite capacité $C_2$ en Ah sont liées par la relation linéaire: $C_2 = aC_1 + b$ , dans laquelle a est un coefficient sans dimension compris entre 0 et 0,2, de préférence 0,01 à 0,2, et b est un coefficient exprimé en Ah compris entre $-0,1C_r$ et $+0,1C_r$. Les coefficients a et b dépendent de ladite température $\theta$ de l'accumulateur et du régime de charge $I_1$ utilisé lors de la première phase; Ils sont déterminés expérimentalement, par exemple à partir d'une courbe de première charge. Le choix du taux de surcharge, habituellement 5% à 20% de la capacité de l'accumulateur, dépend de la chargeabilité de l'accumulateur.

D'autres caractéristiques et avantages de l'invention ressortiront de la description ci-après. On se référera aux dessins annexés sur lesquels :

- la figure 1 est un graphique montrant l'évolution de la température $\theta$, en °C, et de sa dérivée $d\theta/dt$, en °C/h, pour une première phase au régime de $I_c/8$ en fonction du taux de charge $C_i$ exprimé en % de la capacité nominale $C_n$ de l'accumulateur, la température de début de charge $\theta_i$ étant de 22°C,
- la figure 2 est un graphique, analogue à celui de la figure 1, montrant l'évolution de la température $\theta$, en °C, et de sa dérivée $d\theta/dt$, en °C/h, pour une première phase au régime de $I_c/8$ et une deuxième phase au régime de $I_c/20$ en fonction du taux de charge $C_i$ exprimé en % de la capacité nominale $C_n$ de l'accumulateur, la température de début de charge $\theta_i$ étant de 20°C,
- la figure 3 est un graphique montrant la loi d'évolution de la valeur-seuil $(d\theta/dt)_s$, en °C/h, en fonction de la température $\theta$ de l'accumulateur en °C.
- la figure 4 est un graphique analogue à celui de la figure 1, montrant l'évolution de la température $\theta$ et de sa dérivée $d\theta/dt$ lors de la recharge au régime de $I_c/8$ d'un accumulateur déjà chargé.

Les expériences relatées ci-après destinées à illustrer l'invention ont été faites sur une batterie sans maintenance de capacité nominale $C_n$ = 127Ah pour une tension de 312V. La batterie est constituée de 52 modules de 5 accumulateurs assemblés en série. Les modules sont refroidis par circulation d'eau le long de leurs faces latérales. La batterie est équipée de sondes de température placées dans un fût métallique prolongé par une plaque située entre deux modules et isolées thermiquement de l'extérieur. Ce modèle de batterie est plus particulièrement adapté à l'utilisation pour la traction d'un véhicule électrique.

Dans un premier temps on a effectué l'étude de la première phase dite de charge afin de déterminer le critère de passage à la deuxième phase de surcharge. Selon l'invention, la première phase se termine lorsqu'une valeur-seuil $(d\theta/dt)_s$ est atteinte qui dépend de la température $\theta$ de l'accumulateur: $(d\theta/dt)_s = f(\theta)$ . On détermine expérimentalement cette valeur à l'aide de trois séries d'essais.

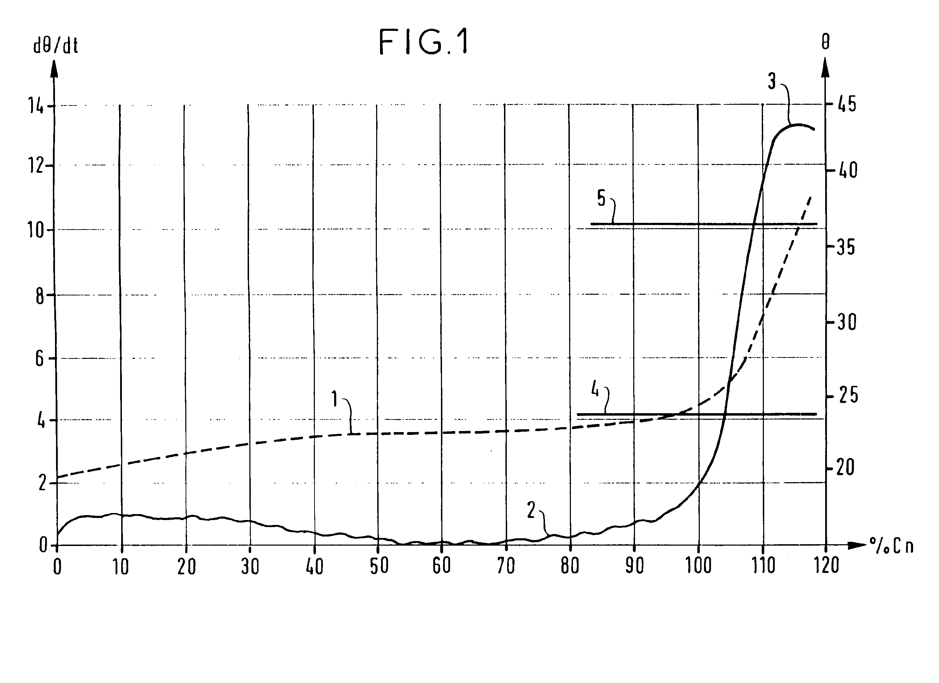

Au cours de la charge, on observe l'évolution de la dérivée $d\theta/dt$ en fonction de la capacité chargée $C_1$ jusqu'à l'obtention de la valeur maximale de la pente $(d\theta/dt)_{max}$. La figure 1 représente l'évolution de la température $\theta$ (courbe 1) et de sa dérivée $d\theta/dt$ (courbe 2) à un régime de 16A ($I_c/8$) lorsque la température de début de charge est de 22°C. La référence 3 est la valeur maximale $(d\theta/dt)_{max}$ atteinte par la dérivée. Cette valeur maximale correspond à l'installation d'une pente décroissante de la température dans l'accumulateur quand les échanges thermiques avec l'extérieur commencent à contre-balancer l'énergie apportée par le courant de surcharge. Le critère d'arrêt de la première phase de charge $(d\theta/dt)_s$ sera choisi dans le domaine compris entre les valeurs inférieure 4 et supérieure 5 de la dérivée $d\theta/dt$.

Le critère choisi ne doit pas être trop bas car des perturbations de température risqueraient d'interrompre la charge de façon intempestive. Des simulations de cas réels amènent à imposer à cette batterie une valeur minimum de variation de température de 4°C/heure, ce qui correspond par exemple à un véhicule soumis subitement à une variation de température de 20°C environ.

Le critère choisi ne doit pas non plus être trop proche de la valeur maximale de la dérivée $(d\theta/dt)_{max}$ car on risquerait de ne pas atteindre le critère d'arrêt et donc de ne pas voir la fin de charge. En effet la courbe de variation de la dérivée de la température par rapport au temps $d\theta/dt$ peut se modifier notamment sous l'effet de perturbations thermiques extérieures, et on observe l'évolution de la forme de la courbe au cours du vieillissement de l'accumulateur. En outre on cherche à limiter la température de l'accumulateur.

La première série d'essais consiste en charges successives à des régimes différents de la batterie initialement complètement déchargée. La première phase a été réalisée respectivement à des courants de 16A soit $I_c/8$, 25A soit $I_c/5$ et 42A soit $I_c/3$. Des expériences semblables ont été réalisées à diverses températures appartenant au domaine de fonctionnement souhaité (-20°C à 50°C) et pour les trois régimes de charge étudiés.

Pour un accumulateur qui a été totalement déchargé avant la charge ($C_i = 0\%$), les résultats sont rassemblés sur le tableau I ci-dessous où

- $\theta_i$ et $(d\theta/dt)_i$ représentent respectivement la température et sa dérivée au début de la charge;
- $\theta_{max}$ et $(d\theta/dt)_{max}$ représentent respectivement les valeurs maximales atteintes par la température et sa dérivée au cours de la première phase;
- $\theta_{f1}$ et $(d\theta/dt)_s$ représentent respectivement la température à la fin de la première phase et la valeur-seuil de la dérivée telle que définie précédemment;
- $\Delta\theta = (\theta_{f1} - \theta_i)$ représente la variation totale de température pendant la charge.

TABLEAU I

| I | $I_c/8$ | $I_c/8$ | $I_c/8$ | $I_c/8$ | $I_c/8$ | $I_c/8$ | $I_c/5$ | $I_c/5$ | $I_c/3$ | $I_c/3$ |
|---|---|---|---|---|---|---|---|---|---|---|
| $\theta_i$ | 38 | 28 | 19 | 1 | -8 | -17 | 26 | 2 | 27 | 0 |
| $(d\theta/dt)_i$ | 1 | 1 | 1 | 1 | 2 | 2 | 2 | 3 | 5 | 7 |
| $\theta_{max}$ | 62 | 41 | 38 | 26 | 18 | 12 | 47 | 30 | 50 | 32 |
| $(d\theta/dt)_{max}$ | 9 | 12 | 13 | 14 | 12 | 11 | 25 | 24 | 43 | 44 |
| $(d\theta/dt)_s$ | 4 | 6 | 8 | 8 | 8 | 8 | 7 | 8 | 6 | 8 |
| $\theta_{f1}$ | 46 | 34 | 27 | 8 | 1 | -5 | 33 | 9 | 39 | 12 |
| $\Delta\theta$ | 8 | 6 | 8 | 7 | 9 | 12 | 7 | 7 | 12 | 12 |

Lors de la charge on observe que l'augmentation de température $\Delta\theta$ est faible et comprise entre 6°C et 12°C, quelle que soit la température initiale de charge; cette différence augmente lorsque le régime de charge augmente.

Aux températures supérieures à l'ambiante et quel que soit le régime, on constate que la valeur-seuil diminue lorsque la température $\theta_{f1}$ (au moment de l'arrêt de la charge) augmente: 8°C/heure à 27°C et 4°C/h à 46°C, au régime de $I_c/8$. En effet plus la température est élevée, plus la chargeabilité est mauvaise et donc plus l'accumulateur dégage tôt de l'oxygène. La réaction de réduction de l'oxygène étant exothermique, elle affecte d'autant plus la chargeabilité. Par conséquent aux températures élevées, la pente de température maximum $(d\theta/dt)_{max}$ est atteinte plus rapidement et la valeur-seuil $(d\theta/dt)_s$ est plus basse.

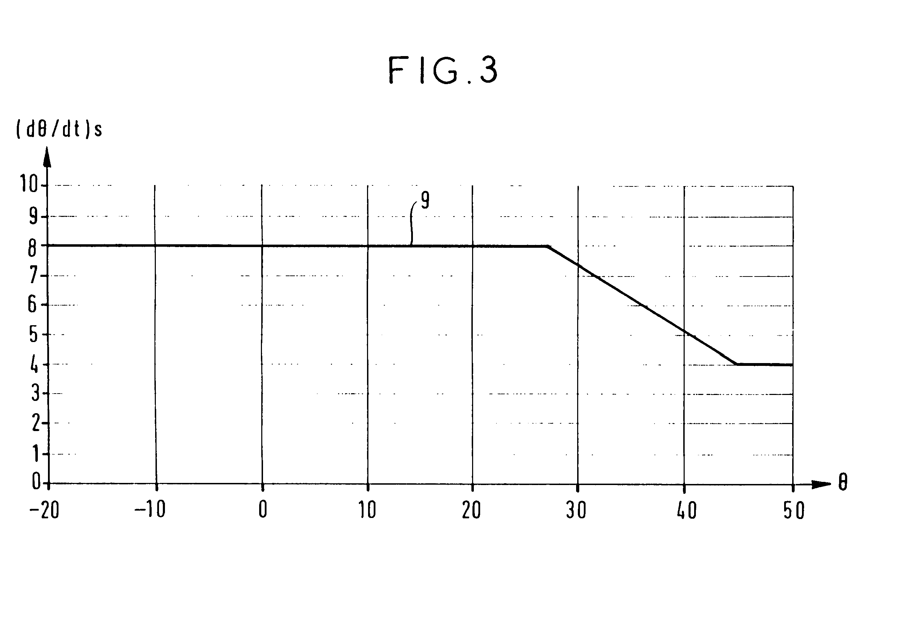

La loi de variation de la valeur-seuil $(\Delta\theta/\Delta t)_s$ en fonction de la température $\theta$ est représentée sur la courbe 9 de la figure 3. C'est une loi de la forme:

$(\Delta\theta/\Delta t)_s = 8°C/h$        pour -18°C < $\theta$ < 27°C et

$(\Delta\theta/\Delta t)_s = 8 - [(\theta-27)/4]$ pour $\theta \geq 27°C$.

Pour les trois régimes testés, on a étudié la différence entre la valeur-seuil $(\Delta\theta/\Delta t)_s$ et la valeur de la dérivée de la température au début de la charge $(\Delta\theta/\Delta t)_i$.

Lorsque les accumulateurs sont complètement déchargés, il apparaît en début de charge une montée en température de pente $d\theta/dt$ comprise entre 1°C/heure et 6,8°C/heure. Ce phénomène s'explique par une résistance interne élevée pour un taux de charge $C_i$ initial faible, qui génère une quantité de chaleur importante dissipée par effet Joule. Au régime de $I_c/8$ et de $I_c/5$, l'augmentation de température $\theta$ en début de charge n'a pas d'influence sur la détermination de la valeur-seuil $(d\theta/dt)_s$ car la variation de température générée est très petite par rapport à la valeur-seuil que l'on a définie. Mais au régime de $I_c/3$ la pente initiale de la variation de température $(d\theta/dt)_i$ peut valoir 7°C/h, ce qui est très proche de la valeur $(d\theta/dt)_s$ choisie précédemment comme critère d'arrêt de la première phase : 8°C/heure.

Il existe un risque d'interruption prématurée de la charge car la différence entre ces valeurs est seulement de l'ordre de 1,5°C/heure à 2°C/heure. Il faut par conséquent, envisager une sécurité supplémentaire pour que la charge ne soit pas interrompue sans fondement. La solution choisie est de débuter la charge obligatoirement à un régime modéré, au plus de 25A ($I_c/5$), jusqu'à un taux de charge compris entre 5% et 20%, puis de passer ensuite à un régime plus rapide de 42A ($I_c/3$).

Dans un deuxième temps, on a effectué l'étude de la deuxième phase dite de surcharge à un régime de 6A, soit $I_c/20$, afin de déterminer sa durée. On cherche à déterminer expérimentalement les coefficients a et b qui relient les capacité $C_2$ et $C_1$ chargées respectivement au cours de la deuxième phase et au cours de la première phase: $C_2 =$

(a x C$_1$) + b.

On surcharge la batterie précédemment décrite de 20% de sa capacité réelle C$_r$ (140Ah), soit une capacité surchargée C$_2$ de 28Ah. Le coefficient de charge k vaut donc 1,2 et on a chargé au total: C$_1$ + C$_2$ = 1,2 x C$_r$.

En pratique on a mesuré que la fin de la première phase est détectée avec un retard de 5Ah par rapport à la capacité réelle C$_r$ servant de référence. Au cours de la première phase on a donc chargé C$_1$ = 145Ah. Ce retard est représenté par le coefficient b qui vaut donc ici -5 .

On a alors:

$$a = 1/C_1 \ (C_2 - b) = 1/C_1 \ [(1,2 \ x \ C_r) - C_1 - b] = 0,19 \ .$$

La loi pour cette batterie est donc: C$_2$ = 0,19C$_1$ - 5 .

Dans une deuxième série d'essais, on vérifie l'applicabilité à la batterie des critères définis précédemment. Ces essais consistent à effectuer la charge avec la valeur-seuil précédemment déterminée de façon à s'assurer que la capacité restituée est optimale, que le coefficient de charge sur la première phase n'est pas trop important, que l'augmentation de pression n'entraîne pas l'ouverture des soupapes de sécurité ce qui conduirait à une détérioration de la capacité, et enfin que le critère est applicable quel que soit l'état de charge initial de la batterie (C$_i$ compris entre 0% et 100%).

On réalise la première phase de charge à un courant constant de 16A (I$_c$/8). La valeur-seuil (dθ/dt)$_s$ est fixée à 8°C/heure en-dessous d'une température de l'accumulateur de 27°C. Au-delà la valeur-seuil varie linéairement avec la température de la manière suivante: (dθ/dt)$_s$ = 8-[(θ-27)/4] jusqu'à 43°C, puis la valeur-seuil redevient constante à 4°C/heure lorsque la température dépasse 43°C.

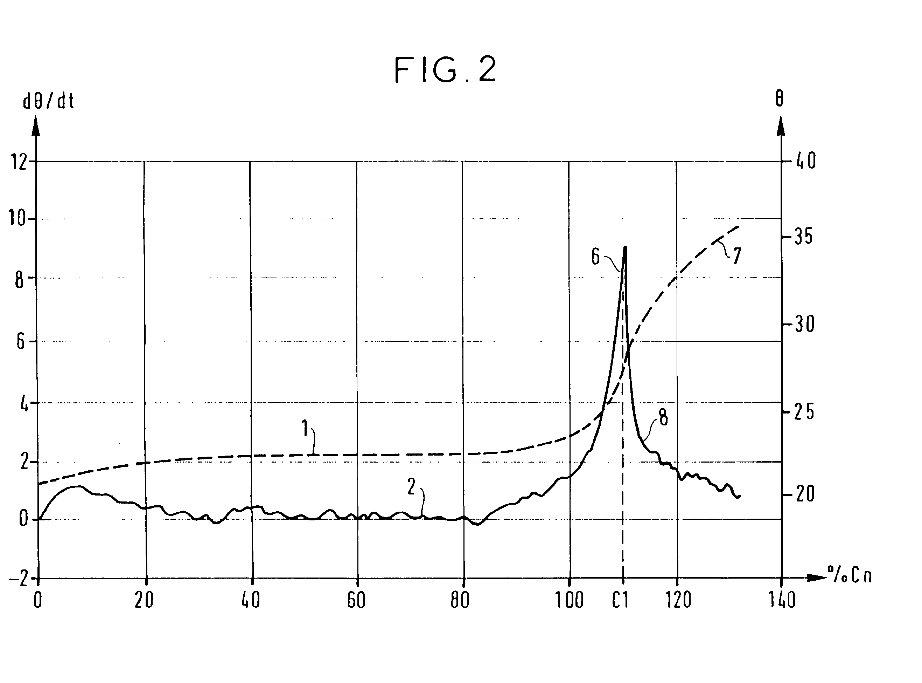

La figure 2 est un exemple de l'évolution de la température θ (courbe 1) et de sa dérivée dθ/dt (courbe 2) à un régime de 16A (I$_c$/8) lorsque la température de début de charge est de 20°C. Le critère d'arrêt (dθ/dt)$_s$ de la première phase de charge 6 correspond à la capacité C$_1$ chargée au cours de la première phase. La deuxième phase est représentée par l'évolution de la température θ (courbe 7) et de sa dérivée dθ/dt (courbe 8) à un régime de 6A (I$_c$/20).

Pour un accumulateur qui a été totalement déchargé avant la charge (C$_i$ = 0%), l'ensemble des résultats est regroupé dans le tableau II qui donne notamment :

. la température initiale θ$_i$ de la batterie et les températures θ$_{f1}$ et θ$_{f2}$ respectivement à la fin de chacune des deux phases,

. la pente initiale de la variation de température (dθ/dt)$_i$,

. les capacités chargées C$_1$ et C$_2$ respectivement pour chacune des deux phases,

. les variations de pression ΔP$_1$ et ΔP$_2$ respectivement pour chacune des deux phases, ainsi que

. le coefficient de charge k en % défini par k = [(C$_1$-C$_2$) / C$_r$] x 100.

TABLEAU II

| I | I$_c$/8 | I$_c$/8 | I$_c$/8 | I$_c$/8 | I$_c$/8 | I$_c$/8 | I$_c$/5 | I$_c$/5 | I$_c$/3 | I$_c$/3 |
|---|---|---|---|---|---|---|---|---|---|---|
| θ$_i$ | 27 | 21 | 19 | 3 | -5 | -18 | 26 | 2 | 28 | 2 |
| θ$_{f1}$ | 36 | 30 | 25 | 10 | 0 | -5 | 33 | 10 | 40 | 14 |
| θ$_{f2}$ | 49 | 40 | 34 | 20 | 11 | -1 | 40 | 17 | 48 | 17 |
| (dθ/dt)$_i$ | 1 | 1 | 1 | 2 | 1 | 3 | 2 | 3 | 5 | 6 |
| (dθ/dt)$_s$ | 6 | 8 | 8 | 8 | 7 | 6 | 6 | 8 | 6 | 8 |
| C$_1$ | 144 | 141 | 143 | 142 | 138 | 137 | 148 | 145 | 137 | 143 |
| C$_2$ | 22 | 28 | 22 | 22 | 21 | 21 | 23 | 22 | 21 | 22 |
| ΔP$_1$ | 0,7 | 0,3 | 0,3 | 0,3 | 0,2 | 0,2 | 0,6 | 0,3 | 0,7 | 0,4 |
| ΔP$_2$ | 1,1 | 0,6 | 0,5 | 0,6 | 0,5 | 0,2 | 0,8 | 0,5 | 1 | 0,4 |
| C$_r$ | 138 | 139 | 140 | 143 | 143 | 142 | 144 | 148 | 138 | 147 |
| k (%) | 1,21 | 1,22 | 1,18 | 1,15 | 1,12 | 1,11 | 1,18 | 1,13 | 1,14 | 1,13 |

Le coefficient de charge est compris entre 1,11 et 1,21 selon la température initiale θ$_i$ de l'accumulateur et le

régime choisi $I_1$. Les capacités $C_r$ restituées en décharge, quel que soit le régime de charge, sont comprises entre 137Ah et 149Ah, soit moins de 9% de dispersion pour une large gamme de températures initiales (-18°C à +28°C).

La variation de pression $\Delta P_1$ à la fin de la première phase de charge est faible ($\leq 0,7$ bars) ce qui indique que la fin de charge sur la première phase a été détectée suffisamment tôt. On note que la pression à la fin de première phase augmente avec la température $\theta$ et le régime $I_1$.

Enfin on s'assure que l'application du procédé de charge selon l'invention n'entraîne pas de détérioration de la batterie dans le cas où l'utilisateur décide de recharger sa batterie sans savoir si elle est chargée ou non. Dans le cas où l'état de la charge initial de la batterie est de 100% (recharge immédiate après une charge) on ne veut pas qu'il y ait de deuxième phase après l'obtention du critère de fin de première phase.

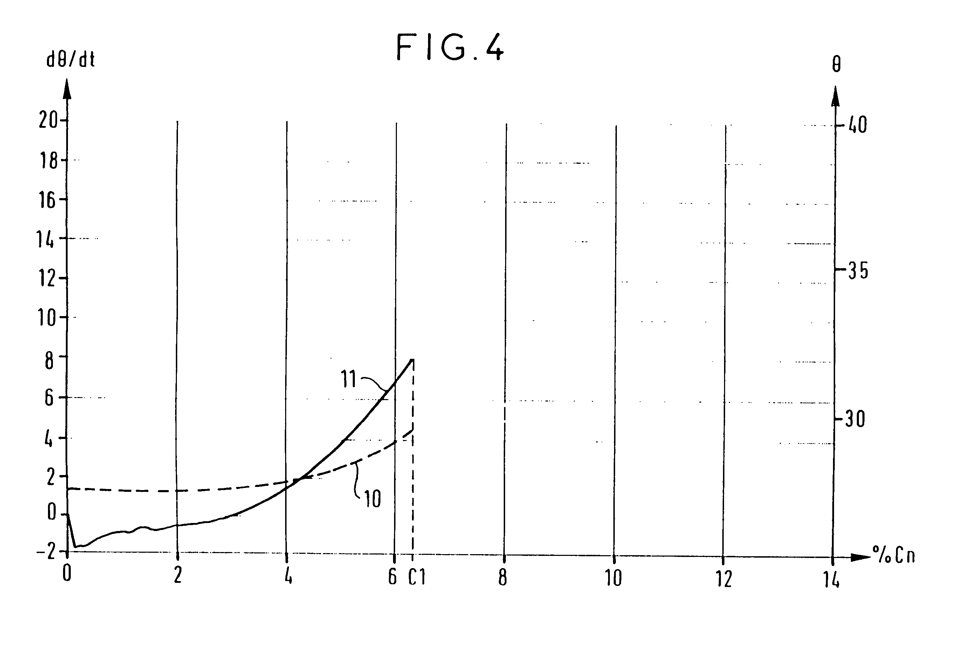

La charge complète a été précédemment obtenue en appliquant le procédé de charge selon l'invention; on a ensuite recommencé à charger au régime de charge de $I_c/8$. C'est ce qu'illustre la courbe de la figure 4, qui représente l'évolution de la température $\theta$ (courbe 10) et de sa dérivée $d\theta/dt$ (courbe 11) lors d'une recharge au régime de $I_c/8$ à partir de $C_i$ = 100% avec une température de début de charge de 25°C. La valeur-seuil $(d\theta/dt)_s = 8$°C/h précédemment définie pour cette température conduira à l'arrêt de la première phase après avoir chargé une capacité $C_1$ représentant environ 6,3% de la capacité nominale $C_n$ soit 8Ah.

Pour un accumulateur qui a été totalement chargé avant la recharge ($C_i$ = 100%), les résultats de cette expérience sont regroupés dans le tableau III dans le cas de différents régimes et pour une large gamme de température initiale allant de -13°C à +37°C.

TABLEAU III

| I | $I_c/8$ | $I_c/8$ | $I_c/8$ | $I_c/5$ | $I_c/5$ | $I_c/3$ | $I_c/3$ |
|---|---|---|---|---|---|---|---|
| $\theta_i$ | 27 | -3 | -13 | 32 | 5 | 37 | 7 |
| $\theta_{f1}$ | 30 | -1 | -10 | 33 | 7 | 37 | 9 |
| $(\Delta\theta/\Delta t)_s$ | 8 | 7 | 6 | 6,5 | 8 | 6 | 8 |
| $C_1$ | 8 | 6 | 6 | 9 | 6 | 9 | 5 |
| $C_r$ | 137 | 147 | 143 | 146 | 150 | 142 | 147 |
| $\Delta P_1$ | 0,1 | 0,1 | 0,2 | 0,2 | 0,2 | 0,2 | 0,2 |

Il apparaît qu'en interrompant la charge lors de détection de la valeur-seuil $(d\theta/dt)_s$ précédemment établie, on recharge environ 5 à 9Ah $(C_1)$ selon la température $\theta$ et le régime $I_1$, ce qui correspond à un taux de surcharge compris entre 4% et 7% de la capacité nominale $C_n$. Ces valeurs sont tout à fait acceptables, dans la mesure où les pressions sont nettement inférieures à la pression d'ouverture des soupapes de sécurité. A une température donnée, une comparaison des capacités rechargées montre que ces capacités sont semblables quel que soit le régime de charge.

Il est souhaitable de définir en outre des critères de sécurité indépendamment des paramètres de charge normale.

Une des expériences réalisées précédemment (tableau I) montre que la capacité restituée n'est que de 100Ah lorsque la batterie à la fin de la première phase est à une température $\theta_{f1}$ de 46°C, ce qui correspond seulement à 80% de la capacité nominale $C_n$. Plus la température de fin de charge $\theta_{f1}$ sera importante, plus la capacité restituée $C_r$ diminuera. Pour que l'utilisateur ait une batterie avec une autonomie suffisante, on peut choisir d'interdire la charge si la température excède une température constituant une limite haute, par exemple 46°C, ce qui lui assure un minimum de 80% d'autonomie et évite une détérioration prématurée de l'accumulateur.

D'autre part en dessous d'une température constituant une limite basse, par exemple -18°C, on a un risque de solidification de l'électrolyte qui conduit à une mobilité ionique très faible donc à une chargeabilité nulle. Pour éviter cela il est préférable d'interdire la charge si la température est inférieure à cette valeur limite.

**Revendications**

**1.** Procédé de charge d'accumulateur industriel Ni-MH sans maintenance, comprenant en combinaison:

- une première phase effectuée à un courant constant $I_1$ compris entre $I_c/10$ et $I_c/2$, où $I_c$ est le courant nécessaire à la décharge dudit accumulateur en une heure, durant laquelle la température $\theta$ dudit accumulateur augmente, et
- une deuxième phase effectuée à un courant constant $I_2$ compris entre $I_c/50$ et $I_c/10$,

le passage de ladite première phase à ladite deuxième phase se produisant lorsque la dérivée de ladite température par rapport au temps $d\theta/dt$ atteint une valeur-seuil $(d\theta/dt)_s$ qui est variable en fonction de ladite température $\theta$ au moment dudit passage.

2. Procédé selon la revendication 1, dans lequel ladite valeur-seuil $(d\theta/dt)_s$ dépend en outre dudit courant $I_1$ de ladite première phase.

3. Procédé selon l'une des revendications 1 et 2, dans lequel ladite valeur-seuil $(d\theta/dt)_s$ est comprise entre une limite inférieure définie par l'impact sur ledit accumulateur des perturbations thermiques qui lui sont extérieures et une limite supérieure définie par la valeur maximale que peut prendre ladite dérivée de ladite température par rapport au temps diminuée dudit impact.

4. Procédé selon l'une des revendications précédentes, dans lequel ladite valeur-seuil $(d\theta/dt)_s$ comprend au moins un domaine de température où elle reste sensiblement constante suivi d'un domaine où elle décroît lorsque ladite température $\theta$ s'élève.

5. Procédé selon l'une des revendications 1 à 3, dans lequel ladite valeur-seuil $(d\theta/dt)_s$ décroît de façon sensiblement linéaire.

6. Procédé selon l'une des revendications précédentes, dans lequel on charge pendant ladite deuxième phase une capacité $C_2$ qui dépend d'une capacité $C_1$ chargée pendant ladite première phase.

7. Procédé selon l'une des revendications précédentes, dans lequel ladite capacité $C_2$ est une fonction linéaire de ladite capacité $C_1$.

8. Procédé selon la revendication 7, dans lequel pour un accumulateur ayant une capacité réelle $C_r$, ladite capacité $C_1$ en Ah et ladite capacité $C_2$ en Ah sont liées par la relation linéaire: $C_2 = aC_1 + b$ , dans laquelle a est un coefficient sans dimension compris entre 0 et 0,2 , et b est un coefficient exprimé en Ah compris entre $-0,1C_r$ et $+0,1C_r$.

9. Procédé selon la revendication 8, dans lequel lesdits coefficients a et b dépendent de ladite température $\theta$ dudit accumulateur.

10. Procédé selon la revendication 8, dans lequel lesdits coefficients a et b dépendent dudit courant $I_1$ de ladite première phase.

**Claims**

1. A method of charging an industrial maintenance-free Ni-MH storage cell, the method comprising in combination:

   - a first stage performed at a constant current $I_1$ lying in the range $I_c/10$ to $I_c/2$ where $I_c$ is the current that would discharge said cell in one hour, during which first stage the temperature $\theta$ of said cell increases; and
   - a second stage performed at a constant current $I_2$ lying in the range $I_c/50$ to $I_c/10$;

   changeover from said first stage to said second stage taking place when the time derivative of said temperature $d\theta/dt$ reaches a threshold value $(d\theta/dt)_s$, which varies as a function of said temperature $\theta$ at the moment of said changeover.

2. The method according to claim 1, in which said threshold value $(d\theta/dt)s$ also depends on said current $I_1$ of said first stage.

3. The method according to one of claims 1 and 2, in which said threshold value $(d\theta/dt)_s$ lies between a lower limit defined by the impact on said cell of temperature disturbances external thereto and an upper limit defined by the maximum value that said time derivative of said temperature can reach, minus said impact.

4. The method according to one of the preceding claims, in which said threshold value $(d\theta/dt)_s$ covers at least one temperature range in which it remains substantially constant followed by a range in which it decreases with an increase in said temperature $\theta$ .

**5.** The method according to one of claims 1 to 3, in which said threshold value (dθ /dt)s decreases in substantially linear manner.

**6.** The method according to one of the preceding claims, in which a capacity $C_2$ charged during said second stage depends on the capacity $C_1$ charged during said first stage.

**7.** The method according to one of the preceding claims, in which said capacity $C_2$ is a linear function of said capacity $C_1$.

**8.** The method according to claim 7, in which for a cell having a real capacity $C_r$, said capacity $C_1$ in Ah and said capacity $C_2$ in Ah are related by the linear relationship: C2 =aC$_1$ +b in which a is a dimensionless coefficient lying in the range 0 to 0.2, and b is a coefficient expressed in Ah lying in the range -0.1 $C_r$ to +0.1 $C_r$.

**9.** The method according to claim 8, in which said coefficients a and b depend on said temperature θ of said cell.

**10.** The method according to claim 8, in which said coefficients a and b depend on said current $I_1$ of said first stage.

**Patentansprüche**

**1.** Verfahren zum Laden eines wartungsfreien industriellen Ni-MH-Akkumulators, umfassend in Kombination:

- eine erste Phase, die bei einem konstanten Strom $I_1$ im Bereich zwischen $I_c$/10 und $I_c$/2 ausgeführt wird, wobei $I_c$ der Strom ist, der für die Entladung des Akkumulators in einer Stunde notwendig ist, während der die Temperatur θ des Akkumulators steigt, und
- eine zweite Phase, die bei einem konstanten Strom $I_2$ im Bereich zwischen $I_c$/50 und $I_c$/10 ausgeführt wird,

wobei das Umschalten von der ersten Phase zur zweiten Phase erfolgt, wenn das Derivat der Temperatur im Verhältnis zur Zeit dθ/dt einen Schwellenwert (dθ/dt)$_s$ erreicht, der in Abhängigkeit von der Temperatur θ im Augenblick des Umschaltens variiert.

**2.** Verfahren nach Anspruch 1, wobei der Schwellenwert (dθ/dt)$_s$ außerdem vom Strom $I_1$ der ersten Phase abhängt.

**3.** Verfahren nach einem der Ansprüche 1 und 2, wobei der Schwellenwert (dθ/dt)$_s$ im Bereich zwischen einer unteren Grenze liegt, die durch die Wirkung von thermischen Störungen auf den Akkumulator definiert ist, die sich außerhalb desselben befinden, und einer oberen Grenze, die durch den maximalen Wert definiert ist, den das Derivat der Temperatur im Verhältnis zur Zeit minus der Wirkung annehmen kann.

**4.** Verfahren nach einem der vorhergehenden Ansprüche, wobei der Schwellenwert (dθ/dt)$_s$ mindestens einen Temperaturbereich umfasst, bei dem er im Wesentlichen konstant bleibt, gefolgt von einem Bereich, in dem er abnimmt, wenn sich die Temperatur θ erhöht.

**5.** Verfahren nach einem der Ansprüche 1 bis 3, wobei der Schwellenwert (dθ/dt)$_s$ im Wesentlichen linear abnimmt.

**6.** Verfahren nach einem der vorhergehenden Ansprüche, wobei während der zweiten Phase eine Kapazität $C_2$ geladen wird, die von einer Kapazität $C_1$ abhängt, die während der ersten Phase geladen wird.

**7.** Verfahren nach einem der vorhergehenden Ansprüche, wobei die Kapazität $C_2$ eine lineare Funktion der Kapazität $C_1$ ist.

**8.** Verfahren nach Anspruch 7, wobei für einen Akkumulator, der eine reale Kapazität $C_r$ hat, die Beziehung von Kapazität $C_1$ in Ah zur Kapazität $C_2$ in Ah durch die lineare Relation: $C_2 = aC_1 + b$ ausgedrückt wird, wobei a ein dimensionsloser Koeffizient im Bereich zwischen 0 und 0,2, und b ein Koeffizient ist, ausgedrückt in Ah, der im Bereich zwischen -0,1$C_r$ und +0,1$C_r$ liegt.

**9.** Verfahren nach Anspruch 8, wobei die Koeffizienten a und b von der Temperatur θ des Akkumulators abhängen.

**10.** Verfahren nach Anspruch 8, wobei die Koeffizienten a und b vom Strom $I_1$ der ersten Phase abhängen.

FIG.1

EP 0 863 599 B1

# FIG.2

EP 0 863 599 B1

# FIG.3

EP 0 863 599 B1

# FIG.4

EP 0 863 599 B1

**EP 0 863 599 B1**

## RÉFÉRENCES CITÉES DANS LA DESCRIPTION

**Documents brevets cités dans la description**

- FR 2705835
- DE 4332533
- WO 9211680 A
- WO 8902182 A
- EP 0308653 A